# EUROPEAN PATENT APPLICATION

(11) **EP 4 703 056 A1**
(43) Date of publication of application: **04.03.2026**
(21) Application number: 24198076.2
(22) Date of filing: 03.09.2024
(51) Int. Cl.: B08B 1/16, B08B 1/30, B08B 1/34, B08B 1/36, B08B 1/20, A01G 9/04

(54) **GUTTER CLEANING APPARATUS**

(71) Applicant: Hortiplan BV, 2860 Sint-Katelijne-Waver (BE)
(72) Inventor: MORIS, Matthias Frans Maria, 2820 Bonheiden (BE)
(74) Representative: Ipsilon Belgium

(57) **Abstract**

An apparatus is designed for cleaning crop gutters in hydroponic systems, particularly in industrial-scale installations. The apparatus includes a transport mechanism that moves the crop gutters along a cleaning path, and a balanced rotary knife with radially arranged blades that remove soil and debris from the gutters. The knife is designed not to cut but to sweep and eject debris from the gutters. The transport mechanism can take various forms, such as conveyor belts or pneumatic systems, and ensures a constant speed during the cleaning process. The apparatus provides efficient and thorough cleaning, reducing the need for manual intervention.

## Description

### Field of the Invention

The present invention generally relates to hydroponics and agricultural engineering, and more specifically to systems for cleaning hydroponic gutter systems.

### Background of the Invention

Gutters are a crucial component in hydroponic applications and are responsible for collecting and directing nutrient-rich solution to crops. Gutters are reused between different crop lifecycles and require a reliable cleaning process to allow this. Their efficient functioning is however often hindered by the accumulation of debris, soil and other types of substrate in the gutters, especially the accumulation of persistent debris that was not removed in between crop cycles. Traditionally, this issue has been addressed through the use of automated cleaning systems that may use fixed scraping devices that run along the bottom of the gutter or that may use high-pressure water beams.

The current state-of-the-art solutions have several drawbacks. For instance, static scrapers tend to push debris together but do not remove the accumulated debris from the gutter trough in a single pass operation, leaving behind residual material that can clog the system.. Moreover does this type of system require an accurate positioning mechanism to position the scraper in the trough behind the end cap of the gutter before it is run through the trough. These positioning systems typically requires high maintenance efforts due to the presence of debris that inevitably comes into contact with the positioning or lowering mechanism. This means that the system's performance and reliability are compromised by the need for frequent cleaning and maintenance of the positioning components, which can be time-consuming and labour-intensive. Similarly, high-pressure cleaners may not be able to effectively remove large chunks of soil that are wedged within the gutter trough.

It is therefore an objective of the present invention to develop a more reliable and thorough cleaning solution for hydroponic gutters that eliminates the need for repositioning the blade between each gutter. The proposed apparatus aims to address these limitations by introducing innovative features that enable efficient and effective cleaning, thereby ensuring optimal crop growth and yield.

### Summary of the Invention

To this aim, according to a first aspect of the invention, there is provided an apparatus for cleaning a crop gutter from soil or debris having the features of claim 1. In particular, the apparatus comprises a transport mechanism conveying the crop gutter along a cleaning path, a balanced rotary knife having at least one blade, each blade having a tip, an actuator that is configured to drive the balanced rotary knife, a mounting system configured to mount the actuator such that a circumference of said balanced rotary knife aligns with said cleaning path such that at least one blade reaches into a longitudinal direction of said crop gutter when said balanced rotary knife is rotating. The invention therefore comprises a number of components that are purposed to effectively clean a crop gutter from any accumulated soil, substrate or debris in general.

A crop gutter in a hydroponic system or a hydroponic channel is a longitudinal gutter that is typically made from materials that durable, non-toxic, and resistant to corrosion. Typically plastic material such as PVC, HDPE, ABS, polypropylene or the like are applied. Crop gutters may also be made from stainless steel or (coated) steels.

Crop gutters or hydroponic channels are used to grow plants without soil in an NFT (Nutrient Film Technique) system. In a Nutrient Film Technique (NFT) system, plants are typically grown without any growing medium or substrate. However, there are variations of NFT systems that incorporate the use of a substrate to provide additional support for the plants and to facilitate the rooting process. A crop gutter is slightly tilted to allow nutrient-rich water to flow through it continuously or at regular intervals. The plants are placed in holes along the top of the gutter, with their roots suspended in the nutrient solution. The solution flows over the roots, providing them with the necessary water and nutrients for growth. In that case that a growing medium or substrate material is used, the substrate provides support for the plants, it facilitates rooting, may improve the nutrient uptake and may reduce stress for the plants.

In such a modified NFT system, the nutrient solution is still circulated through the channels, but the substrate helps to retain moisture and nutrients around the roots. This can be particularly beneficial for plants that require a higher level of moisture or nutrients, such as leafy greens or fruiting plants. However the presence of the growing medium or substrate may complicate the removal and cleaning of the gutter trough after the harvesting or removal of the crop.

Especially in industrial scale NFT installations, a large amount of gutters have to be cleaned for reuse on a daily basis. The running length of gutters to be cleaned may easily run into multiples of 100 meters per hour. It is therefore essential that a suitable cleaning technique is reliable and fast enough to deal with these requirements. In large NFT installations, the crop gutters are typically arranged in parallel to each other during the crop lifecycle. These parallel crop gutters have typical lengths between 3 and 30 meters. Longer gutters can be more efficient in terms of space and resource use, as they allow for more plants to be grown in a smaller area. However, longer gutters may also require more frequent monitoring and maintenance to ensure that the nutrient solution is flowing properly and that the plants are receiving adequate water and nutrients.

When the cultivated crop in the crop gutters is ready for harvesting, an automation or automated mechanical system may unload the gutter with its crop from the cultivation area. The crop gutter may then be transported in its longitudinal direction by means of a conveyor system that presents the crop gutter with its crop to an automated harvesting system, or to a harvesting area where the harvesting is performed by manual labour. Depending on the type of crop that is cultivated, the crop may be harvested by, for instance, cutting it at a certain distance above its roots. The harvested produce is then separated from the root mass comprising the root material and the substrate. In this case will the root mass remain in the crop gutter trough after the harvesting is completed.

It is at this point in the entire process, after the harvesting is completed, that the transport mechanism of the invention enables the crop gutter to move along a predetermined path for effective cleaning. The transport mechanism is typically a mechanical conveyor system that connects with the harvesting system to receive uncleaned crop gutters from the harvesting system or area.

The transport mechanism can be implemented using various mechanisms such as conveyor belts, rollers, or even pneumatic systems. For instance, the transport mechanism may be a linear actuator that moves the crop gutter in a straight line, allowing the cleaning of the entire gutter without interruption. In a preferred embodiment, the transport mechanism may comprise a set of rubber wheels that apply a pressure on the lateral sides of the gutter to drive it along the cleaning path. Alternatively, the transport mechanism may actuate the gutter by means of a conveyor belt carrying the gutter along the cleaning path. The transport mechanism therefore transports the crop gutters at a constant speed along the cleaning setup of the gutter cleaning stage.

The apparatus of the invention comprises a balanced rotary knife that has a number of radially arranged blades. Such a balanced rotary knife features a star-shaped or radially arranged blade assembly that may have multiple cutting edges at the tips of the blades arranged radially around a central axis. The balanced rotary knife is typically designed to make multiple cuts simultaneously as it rotates, but in the context of this invention it performs a slightly different action. The balanced rotary knife of the invention is not configured to cut through material but is rather configured to sweep up, lift out or eject the debris that may be stuck into the gutter. For that purpose, the width of the radially arranged blades are wider than the width of a cutting knife. In other words, the width of the radially arranged blades may approach or exceed a millimetre up to a few millimetres. As opposed to use the knife for cutting, the balanced rotary knife is operated at lower rotation speeds. Typically the knife rotates at 1 to 5 rps (revolutions per second or Hz).

The blade assembly of the balanced rotary knife is typically mounted on a shaft or arbour that allows it to rotate freely. The term "balanced" refers to the distribution of weight in the rotary knife, which is intended to enhance the stability and reliability of the blade. In a balanced rotary knife, the weight is evenly distributed around the axis of rotation, allowing the radially arranged blades to rotate smoothly with minimal vibration. In case that the balanced rotary knife does not have fully balanced blades, i.e. that the blades are not arranged symmetrically around its rotation axis, then the balance may be achieved by provision of a dedicated counterweight to reach the blades' balance. This may occur for instance when the rotary knife comprises only one blade. The balancing of the blades can make the apparatus easier to control and more stable during its use.

The shaft or arbour on which the blade assembly is mounted, connects to the actuator that is configured to drive the balanced rotary knife. The actuator may be a motor or other driving mechanism that makes the balanced rotary knife rotate in a plane with the shaft or arbour as centre of rotation. The actuator may drive the shaft or arbour directly or indirectly by means of a gearbox or other power transmission means. The rotation of the balanced rotary knife causes the circular circumference of the knife.

The blades are usually made of high-quality steel or other durable materials and can be shaped as needed. The rotary balanced knife of the invention ensures efficient and thorough cleaning by rotating the multiple blades within the trough of the crop gutter. The rotation movement has the effect that any cluttered debris or accumulated soil is ejected from the gutter with force. The effect of the rotating knife is that multiple passes of consecutive knife impacts on a same lump or chunk of debris will eventually eject it from the gutter. The balanced design allows for even rotation and minimizes vibrations, which can help prevent damage to the gutter or surrounding equipment. Each blade has a tip that reaches into the trough while keeping the tip at a distance from the gutter base while rotating. A tip has to be understood as the active part or portion of the blade that comes into contact with the substrate or debris. This active part may have any angle relative to the centreline that is obtained by connecting the middle of the rotary knife with the outermost point of this tip. A minimal distance is kept between the rotating tip of the blades and the gutter base avoiding direct contact or impact of the balanced rotary knife with the gutter base itself. This configuration effectively removes soil and debris, by means of scraping and catapulting the debris out of the gutter trough.

The balanced rotary knife comprises at least one radially arranged blades. The reach of the balanced rotary knife is determined by the circumference of the blade assembly. The circumference of the blade assembly refers to the distance around the outer edge of the blades, in other words around the tips of the blades. When the blade assembly is rotated, the cutting edges extend outward from the center of the balanced rotary knife, allowing them to reach into the gutter and eject any debris that may be present.

The mounting system of the invention is a device that is configured to mount or fixate the actuator at a desired position and height above the cleaning path. The mounting system mounts the actuator such that it can bring the balanced rotary knife into a position where its circumference aligns with the cleaning path for cleaning the gutter. The mounting system is designed to securely attach or stabilize the actuator at a specific position and elevation above the cleaning path that guides the gutter. This allows the actuator to move a balanced rotary knife into a position where its circular edge aligns with the gutter's path for effective cleaning. In simpler terms, the mounting system helps to properly position the cleaning mechanism above the gutter so it can clean it effectively as the gutter moves along the cleaning path.

In a preferred embodiment, the mounting system is configured to bring the circumference of the balanced rotary knife substantially close to the gutter base. This position allows the radially arranged blades to reach deep enough into the gutter trough for effective cleaning. In this context, "substantially close" refers to the positioning of the balanced rotary knife's circumference in relation to the gutter base. The knife should be positioned as near as possible to the gutter base without touching it, while also taking into account a small tolerance distance. This tolerance distance is necessary to accommodate any irregularities or deviations in the straightness of the gutter base, ensuring that the knife does not come into direct contact with the gutter base and can still effectively clean the gutter without causing damage.

In another preferred embodiment, the actuator driving the balanced rotary knife is configured to assume a waiting position, which means that the actuator is configured to stop its rotation, and by consequence, to stop the rotation of the balanced rotary knife it drives. The waiting position is assumed when the rotary knife is oriented under a certain angle. The waiting position of the actuator is therefore translated into a waiting position of the balanced rotary knife, and more particularly into a certain position of the radially arranged blades with respect to the horizontally positioned gutter trough.

The actuator that drives the balanced rotary knife can assume this waiting position, wherein the actuator stops rotating. As a result, the balanced rotary knife also stops rotating. The radially arranged blades of the knife come to rest in a specific position with respect to the horizontally positioned gutter trough, which is the channel through which the crop gutters are conveyed.

The waiting position that the actuator is configured to assume is a position wherein the tips of radially arranged blades exhibit a maximal clear height under the two tips that are closest to the gutter trough. When the balanced rotary knife is brought into this waiting position, a maximal clear height is available between the tips of the radially arranged blades and the base of the crop gutter, such that it becomes possible to convey an end cap of a crop gutter underneath the tips which are brought to a standstill. This waiting position is critical because it allows for the maximum clearance between the tips of the blades and the base of the crop gutter. Specifically, this means that when the balanced rotary knife is brought into this position, the tips of the blades exhibit a maximal clear height under the two blades closest to the gutter trough. This clearance allows for the easy passage of an end cap of a new crop gutter underneath the stationary tips of the radially arranged blades.

In summary, this waiting position enables the machine to convey a new crop gutter into place without having to lift the entire actuator and knife assembly. Instead, the end cap can simply be slid under the stationary blades while they're at rest, allowing for efficient and convenient maintenance or replacement of the gutters.

In another embodiment, the mounting system is configured to lift the position of the actuator such that the tips of the blades do not collide with said end cap of said crop gutter when it is inserted into the cleaning path, and while the balanced rotary knife is rotating. This means that when an end cap of a new crop gutter needs to be inserted into the cleaning path, the mounting system raises the actuator (and by extension, the balanced rotary knife) so that the tips of the blades do not collide with the end cap of the crop gutter, while the balanced rotary knife is still rotating.

When a new crop gutter needs to be inserted, the mounting system temporarily lifts the entire actuator and knife assembly just enough to clear the path for the end cap. This ensures that the blades don't interfere with or damage the end cap as it's being inserted into the cleaning path. By lifting the actuator, this design allows for a safer and more controlled process of inserting new crop gutters without having to stop the machine or lift the entire assembly manually.

In yet another embodiment, the radially arranged blade has a protruding tip, which means that the tip that points forward in the direction of the rotation, such that the debris supports a swooping action that swoops up the debris, and ejects it out of the gutter. The feature of the protruding tip pointing forward is significant because as the blade rotates, its tip moves through the debris and gutter system, performing an ejection action that allows the blade to scoop up debris and eject it with force out of the gutter. This design feature enables the radially arranged blade to effectively collect and remove debris from the crop gutters as it rotates. The protruding tip creates a sweeping motion that helps gather and expel debris from the system, ensuring efficient cleaning and maintenance of the gutters.

In another embodiment, the protruding tip comprises a cutting edge at the front of the protruding tip. This means that the tip has a sharp, angled surface that can be used to cut or slice through debris as it rotates. When the protruding tip hits any debris during rotation, there are two distinct actions. The lowest point of the protruding tip, i.e. the cutting edge, comes into contact with the debris first. At this point, the cutting edge has a cutting action, which means it severs or slices through the debris, breaking it down into smaller pieces. As the blade continues to rotate and move upwards, the higher portion of the protruding tip, i.e., above the cutting edge, comes into contact with the cut debris. At this point, the swooping action takes over, using the curvature of the blade to scoop up and eject the already-cut debris from the gutter.

In a preferred embodiment, the balanced rotary knife comprises between 1 and10radially arranged blades. The shape of the balanced rotary knife is linear when 2 blades are being applied. The balanced rotary knife becomes star-shaped as soon as 3 up to 10 blades are being applied. The aspect of the limited number of blades becomes important for the invention when the tips of radially arranged blades exhibit a maximal clear height between the two tips that are closest to the gutter trough, and the gutter trough itself. A minimal clear height under the two lowest tips is required to insert a new gutter for cleaning into the cleaning path without having to lift the position of the actuator.

In the case that two blades are applied on the rotary knife, it speaks for itself that the maximum clear height is available when the blades are arranged in parallel to the gutter base. In the case hat three or more blades are applied, the geometry and the size of the balanced rotary knife determines the clear height between the two closest tips to the gutter base and the gutter base surface. Smaller sizes of rotary knives, i.e. rotary knives with smaller radii, will be possible to meet the requirements for models with the least number of radially arranged blades. In other words, the choice for a three-bladed rotary knife will allow a smaller knife-radius compared to four-bladed rotary knife. The four-bladed rotary knife will require a larger radius to ensure that the blade tips can substantially reach into the gutter trough, while the end cap of a gutter can pass under the two blade tips when the actuator driving the rotary knife is brought into the waiting position.

The design of the balanced rotary knife therefore requires careful consideration of the number of radially arranged blades, their shape, and the geometry of the machine. The specific aspect ratio of the blades' tips ensures easy cleaning and maintenance, while the shape and size of the rotary knife determine its suitability for different applications.

The frontal sides of the blades of the balanced rotary knife preferably have a substantial width. The frontal surface of the blade has to be understood is the surface of the blade that is oriented towards the moving direction of the blade when the rotary knife rotates. The frontal side of a blade comes into contact with the debris and is used to eject the debris with force from the gutter. For that purpose, the frontal surface, except for the frontal blade tip surface with the cutting edge, preferably has a substantial width to allow for an effective ejection of the debris from the gutter. For this particular reason, the balanced rotary knife may be built up from a composite of multiple blade layers. The blade layers contribute to the substantial width of the rotary knife, which has to be understood as the thickness where the rotary knife does not cut the debris into smaller pieces, but rather kicks the debris out of the gutter by force.

These technical features overcome the objective technical problem by enabling a more reliable and thorough cleaning of hydroponic gutters. The advantages of the invention are that it provides efficient and effective cleaning, reducing the need for manual intervention.

Further advantages and embodiments of the present invention will become apparent from the following description and drawings.

### Brief Description of the Drawings

Fig. 1 gives a schematic overview of an automated hydroponic cultivation system in a top-side view;
Fig. 2 illustrates a more detailed schematic representation of the main growing area of the automated hydroponic cultivation system comprising a gutter offloading section and a harvesting area in a top-side view;
Fig. 3 is a schematic representation of the top-side view of a gutter cleaning area with the gutter cleaning apparatus of the invention ;
Fig. 4a is lateral view on a detail of the gutter cleaning apparatus of the invention;
Fig. 4b is the opposite lateral view on the same detail of the gutter cleaning apparatus of the invention;
Fig. 5a is another lateral view on a detail of the gutter cleaning apparatus of the invention showing in detail the waiting position of the balanced rotary knife allowing the blades to pass over the and cap of the gutter;
Fig. 5b is a lateral view on the same detail of the gutter cleaning apparatus of the invention where the balanced rotary knife rotates and reaches with its blades into the trough of the gutter while rotating;
Fig. 6 is detail view on a four-spoked balanced rotary knife of the invention;
Fig. 7 is perspective view on the same balanced rotary knife as in Fig. 6;
Fig. 8 is detail view on a five-spoked balanced rotary knife of the invention;
Fig. 9 is a profile view of a hydroponic gutter with an open topside that may be cleaned by the apparatus of the invention;
Fig. 10 is a profile view of another type of hydroponic gutter with an open topside that may be cleaned by the apparatus of the invention.

### Detailed Description of Embodiment(s)

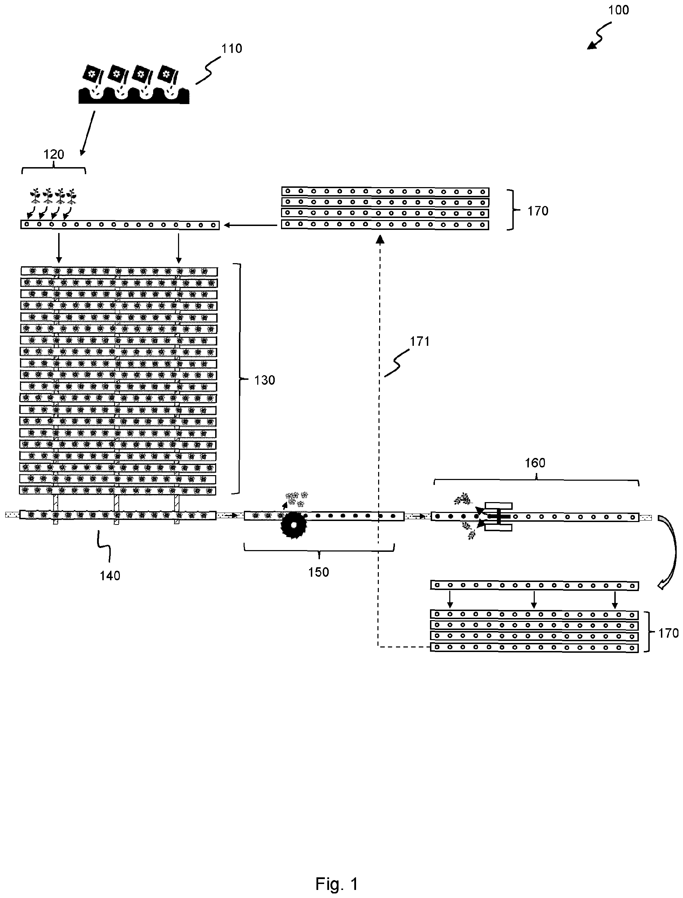

Figure 1 gives an schematic overview of an automated hydroponic cultivation system 100 in which the apparatus of the invention can be put to practice. In the top left area of the drawing, a seeding or propagation area 110 is schematically represented. The seeding or propagation area 110 is a dedicated space designed for starting new plants from seeds or cuttings before they are transferred to the main growing area 130. The purpose of the seeding or propagation area 110 is to give seeds and young plants the best possible start before they are moved to the main hydroponic system. This separation allows for more efficient use of space and resources in the primary growing area.

As can be seen in the schematic overview, in a next step the seedlings or plants are moved to the transplanting area 120 in the automated hydroponic cultivation system which serves as an intermediate stage between the propagation area 110 and the main growing area 130. This intermediate step helps maximize overall system efficiency and crop success rates by focussing on root development, acclimation, space optimization, nutrient transition and disease prevention.

The main growing area 130 is the primary space where plants spend most of their life cycle and where most of the crop biomass is produced, from their intermediate stage to harvest. It's designed to maximize yield, quality, and efficiency in plant production. The gutter offloading area 140 is installed at the very end of the main growing area 130. When arriving here, the crop carried by the offloaded gutter is ready for harvesting. The gutter carrying the crop is carefully disconnected from the main growing area and is aligned and placed on a transport mechanism that transports the gutter in longitudinal direction towards the harvesting area 150.

The harvesting area 160 is the area of the cultivation system 100 where the marketable yield is harvested. It is a dedicated zone where the crop gutters are transported to by on the conveyor belt for harvesting. This way, the crop is separated from the substrate on which it grows and also from any unusable residue in a continuous process. The harvesting may be performed by manual labour or by an automated or semi-automated process. In an automated setup the plants in their gutter move through a cutting mechanism on a transport mechanism.

After the harvesting step, the gutter cleaning apparatus of the invention is installed along the cleaning path in the gutter cleaning area 160. Gutters arriving in the cleaning area will still comprise substrate and unusable residue that has to be removed from the hydroponic gutter before it can be reused. The cleaned gutters are subsequently accumulated in an empty gutter buffer or storage area 170 for later use. The cleaned gutters may then be further transported 171 to present themselves for reuse when the seedlings are transplanted in the transplanting area 120.

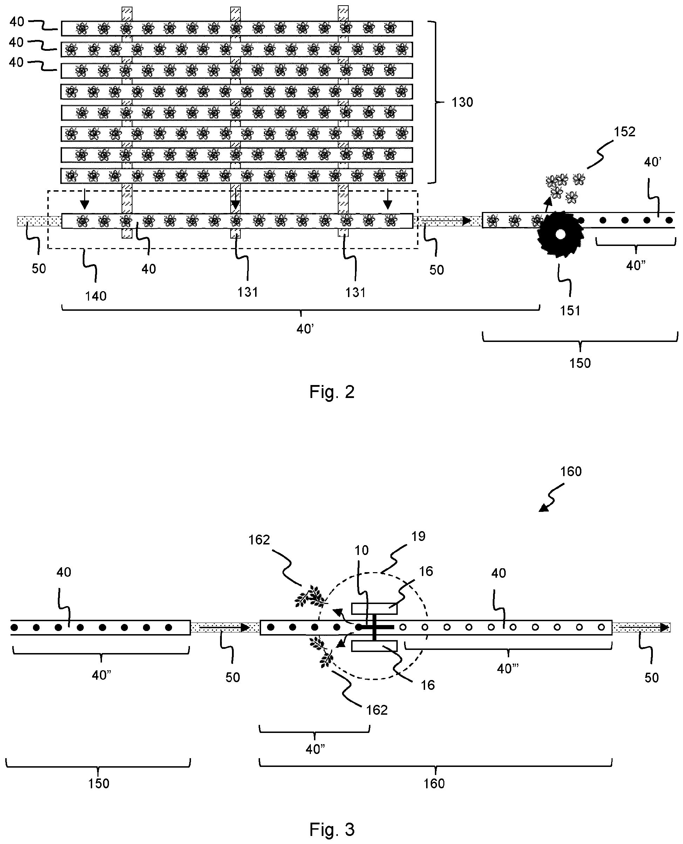

Figure 2 illustrates a more detailed schematic representation of the main growing area 130 of the automated hydroponic cultivation system 100 in bird's-eye view, and includes the gutter offloading section 140 and harvesting area 150. The main growing area 130 comprises a high number of hydroponic gutters 40 that are arranged in parallel and are supported by a gutter supporting system 131. During their passage in the growing area 130, the lined-up gutters 40 move towards a gutter offloading area 140, where they arrive when the crop is ready for harvesting. When arrived at the gutter offloading area 140, the gutter 40 is offloaded onto a transport mechanism 50 where it is transported into its longitudinal direction indicated in the drawing by the arrow pointing to the right side, and which is in the direction of the harvesting area 150.

The portion 40' of gutter 40 comprises the full grown plants with their roots embedded in the substrate or seed plug, and represents the portion of the gutters which have not been harvested yet by the automated harvesting mechanism 151. As soon as a portion of the gutter 40 passes the automated harvesting mechanism 151 and the marketable produce 152 is harvested, the gutter portion 40" no longer comprises marketable produce, but only the remaining root mass and the substrate, which is called the debris.

Figure 3 is a detailed schematic representation of a portion of the harvesting area 150 that is depicted on the left side of the drawing, and the gutter cleaning area 160, depicted on the right side of the drawing. The left side of the drawing illustrates the portion of the harvesting area 150 where gutter 40 comprises a portion 40" that comprises debris that is to be removed by the gutter cleaning apparatus 19 of the invention. The gutter portion 40" comprising the debris is further transported by transport mechanism 50 along a longitudinal path passing through the gutter cleaning area 160, called the cleaning path. Portion 40" of gutter 40 arrives at the cleaning apparatus 19 of the invention and passes underneath the balanced rotary knife 10 that is supported by mounting system 16. The debris 162 is ejected out of the gutter portion 40" by the rotating rotary balanced rotary knife 10, leaving a cleaned gutter portion 40"' behind when the gutter 40 passed the cleaning the device 19.

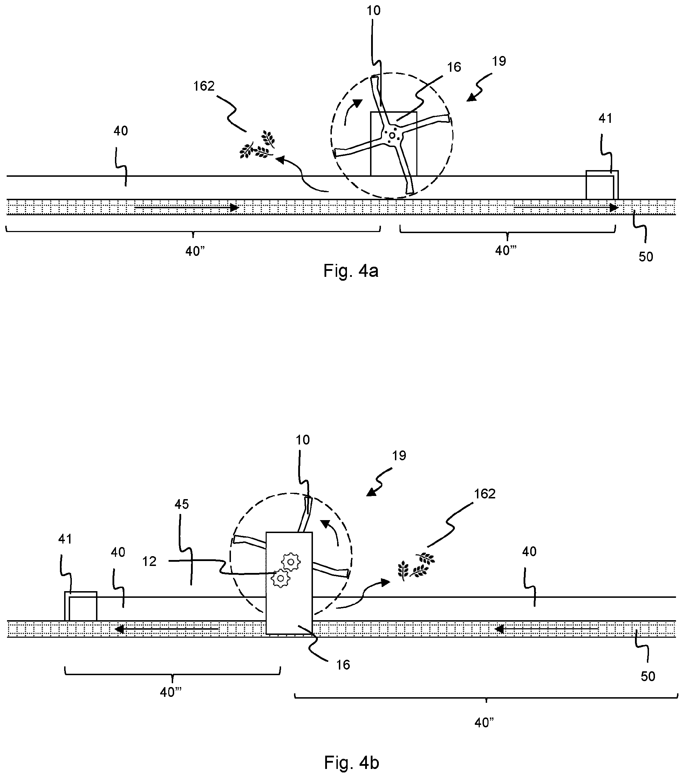

Figure 4a and 4b depict a left and right lateral view on the cleaning apparatus of the invention in greater detail, in combination with a gutter 40. Figure 4a shows the transport mechanism 50 which transports gutter 40 from left to right. Portion 40" of gutter 40 arrives at the cleaning apparatus 19 of the invention and encounters the balanced rotary knife 10 that rotates its radially arranged blades 11 in the opposite direction of the oncoming gutter 40. This rotating action ejects any debris 162 that is present in the gutter trough by force and enabling an efficient cleaning process. The gutter 40 has an end cap 41 on the right side closing off one end of the gutter to prevent water and nutrient solution from flowing out, while also providing a barrier to prevent debris and pests from entering the system. The balanced rotary knife 10 is supported by a mounting system 16 that positions it at a desired height and also supports the actuator 12 driving the rotation movement. When gutter portion 40" passes the cleaning apparatus 19 a cleaned gutter portion 40"' appears and moves away from the cleaning apparatus.

Figure 4b shows the same cleaning apparatus 19 seen from the other lateral side. In this view an embodiment of the mounting system 16 with the schematic representation of the actuator 12 are fully visible.

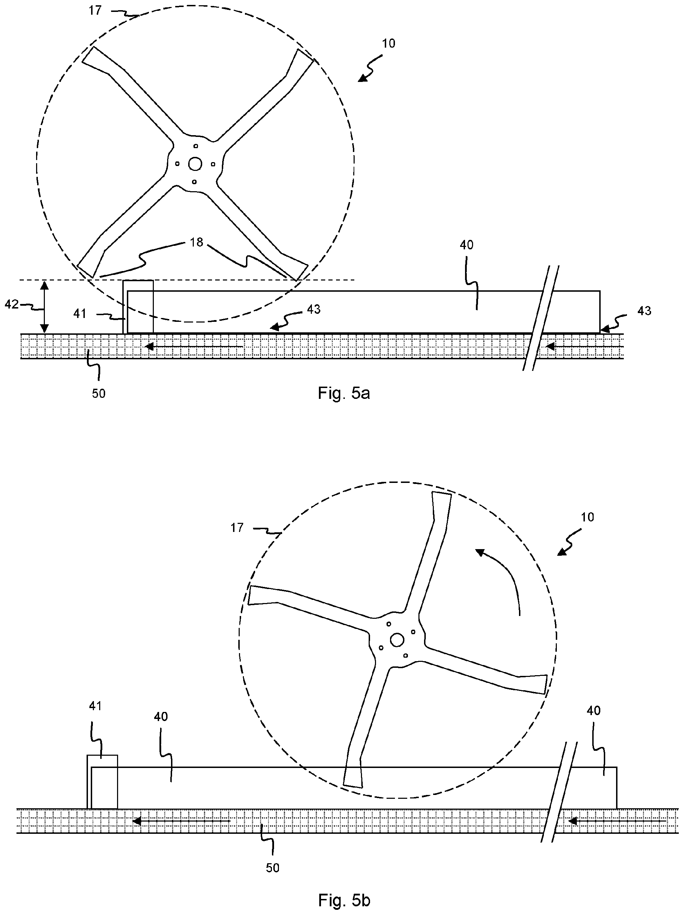

Figure 5a depicts a four-bladed balanced rotary knife 10 in its waiting position. The waiting position of the rotary knife is a specific position in which the rotary knife can be brought by the actuator 12 when mounted in a fixed position on the mounting system. The waiting position of the balanced rotary knife 10 is the position in which the two blade tips 18 that are closest to the bottom of gutter 40 or gutter trough 43 are rotated. In this waiting position, the two blade tips 18 are positioned at a same height or distance from the gutter trough 43. In other words, the waiting position is the position in which the clear space between the gutter trough 43 and the two blade tips 18 is maximized. In this position, both blade tips of the blades that are closest to the gutter trough are parallel to the gutter 40 itself. The waiting position that the actuator 12 is configured to assume is a position wherein the tips of radially arranged blades exhibit a maximal clear height under the two tips 18 that are closest to the gutter trough 43. As can be seen in the drawing, the end cap 41 of the gutter can pass underneath the two blade tips 18 when moved to the left side. The waiting position has therefore be assumed by the balanced rotary knife to allow to insert a new gutter with an end cap into the cleaning apparatus. The waiting position therefore allows to bring the gutter trough 43 in position for cleaning.

The cleaning process then starts as soon as the rotation of the balanced rotary knife is initiated. This is illustrated in Figure 5b, in which end cap 41 and gutter 40 is transported to the left side of the drawing while the rotary knife 10 rotates while reaching with its blades into the gutter trough. Circumference 17 illustrates the reach of the radially arranged blades into the gutter 40. The circumference of said balanced rotary knife 10 reaches into the through substantially close to the gutter base 43. Substantially means in this context that circumference 17 keeps a distance from the gutter base 43 that is small enough such that most or preferably all debris is removed from the gutter while cleaning, but wherein that distance is big enough as not to touch and thereby damage the gutter itself. The distance therefore is of an order of magnitude between a millimetre and a few centimetres. The actual distance is determined by the tolerances of the linearity of the gutter itself, the stability of the transport mechanism and the type of debris that is to be removed from the gutter.

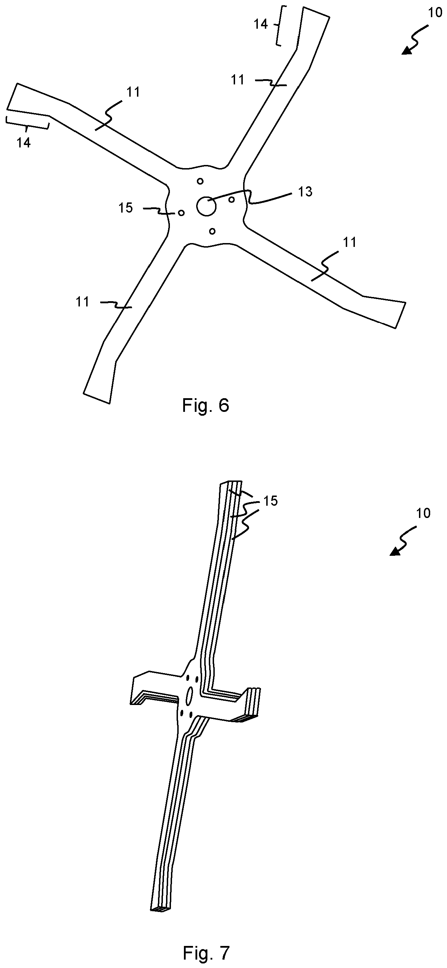

Figure 6 is a drawing of a four-bladed balanced rotary knife 10, indicating the blade tips 14, the radially arranged blades 11, the mounting hole 13 and screw holes 15. The mounting hole 11 is used to fix the rotary knife to the actuator 12.

Figure 7 is a perspective drawing of the same four-bladed rotary knife 10. In an embodiment, the rotary knife may be a composite of a number of knife blades 15, as is the case in this drawing. In this case, there are three knife blades making up a composite of which the elements all have the same shape. This type of composite increases the width of the balanced rotary knife, enhancing its capability to knock debris out of the gutter with force.

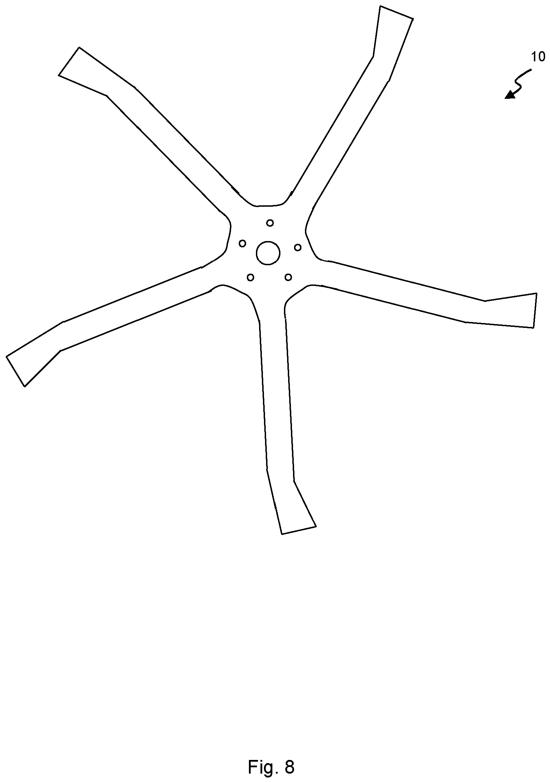

Figure 8 is a drawing of a five-bladed balanced rotary knife 10.

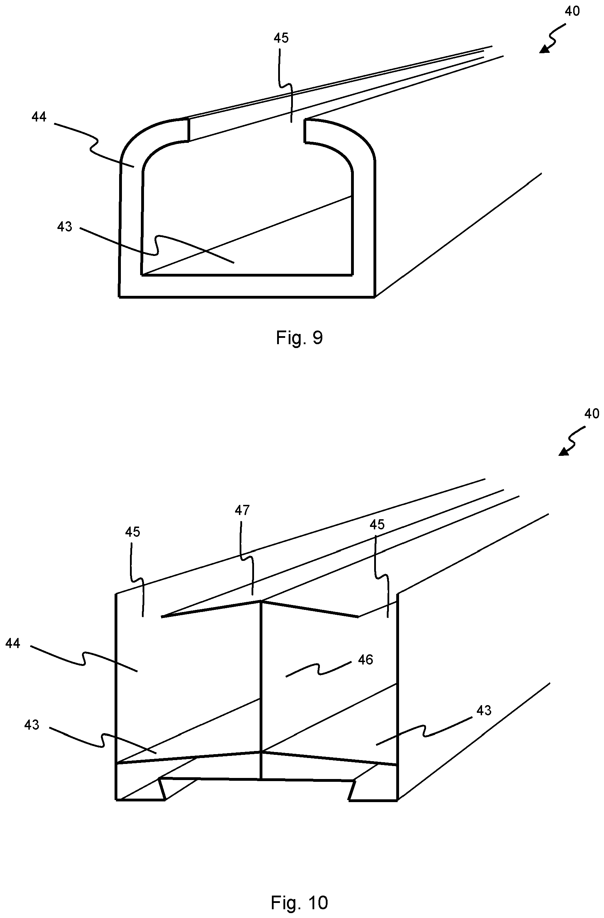

In figure 9 and 10, two different types of hydroponic gutters are depicted that can be successfully cleaned by the apparatus of the invention. Conventional cleaning devices that for instance use a static scraper or cleaning knife generally fail to clean these types of gutters since the debris is lifted up and gets stuck below the top-side edges of the gutter. The rotating knife of the cleaning apparatus of the invention can however clean this type of gutter more effectively as it ejects the debris with force out of the gutter trough. A first type of gutter depicted in figure 9 is a partially open D-shaped gutter of which the top edges 44 are rolled inward. The gutter has an opening 45 at the top side that may clamp seed plugs carrying the plants into their position. The lower part of the seed plugs rest on the trough 43 of the gutter 40, ensuring that the lower part of the seed plug is in contact wit he hydroponic fluid.

Figure 10 depicts another profile of a gutter type that successfully can be cleaned by the apparatus of the invention. This gutter is an open-top gutter 40 having two side walls 44 and a dividing wall 46 separating the gutter into two compartments. The top-side wall 47 partially covers both compartments, but leaves an opening 45 above both compartments. The opening 45 allows insertion of the seed plugs. Two gutter troughs 43 are present in both compartments.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An apparatus (19) for cleaning a crop gutter (40), said crop gutter comprising a trough, a gutter base (43) and an end cap (41), the apparatus comprising:
- a transport mechanism (50) conveying the crop gutter (40) along a cleaning path,
- a balanced rotary knife (10) having at least one radially arranged blades (11),
- an actuator (12) configured to drive the balanced rotary knife (10),
- a mounting system (16) configured to mount the actuator (12) such that a circumference (17) of said balanced rotary knife aligns with said cleaning path (50) such that at least one blade reaches into a longitudinal direction of the trough of said crop gutter when said balanced rotary knife is rotating.

2. The apparatus of claim 1, wherein said circumference (17) of said balanced rotary knife (10) reaches into the through substantially close to the gutter base (43).

3. The apparatus of claim 1, wherein the actuator (12) driving the balanced rotary knife (10) is configured to assume a waiting position such that a clear height (42) under the tips of the blades (14) exceeds a height of said end cap (41) of said crop gutter (40), when the crop gutter (40) is inserted into the cleaning path.

4. The apparatus of claim 1, wherein the mounting system is configured to lift the position of the actuator such that the tips of the blades do not collide with said end cap of said crop gutter, when the crop gutter is inserted into the cleaning path.

5. The apparatus according to claim 1, wherein said blade of the balanced rotary knife has a protruding tip.

6. The apparatus according to claim 1, wherein the blade of the balanced rotary knife comprises a cutting edge at the front surface of the protruding tip.

7. The apparatus according to claim 3, wherein the balanced rotary knife comprises 2 up to 6 blades.

8. The apparatus according to claim 1, wherein the balanced rotary knife comprises a composite of multiple blade layers.

9. The apparatus according to claim 1, wherein each blade tip comprises a cutting edge.
